(19) Europäisches Patentamt
European Patent Office
Office européen des brevets

(11) **EP 1 665 637 B1**

(12) **EUROPÄISCHE PATENTSCHRIFT**

(45) Veröffentlichungstag und Bekanntmachung des Hinweises auf die Patenterteilung:
**01.08.2007 Patentblatt 2007/31**

(21) Anmeldenummer: **04766380.2**

(22) Anmeldetag: **30.07.2004**

(51) Int Cl.:
*H04L 12/26* (2006.01)  *H04B 3/46* (2006.01)
*H04L 1/24* (2006.01)  *H04M 3/00* (2006.01)
*H04M 3/30* (2006.01)

(86) Internationale Anmeldenummer:
**PCT/EP2004/051672**

(87) Internationale Veröffentlichungsnummer:
**WO 2005/027413 (24.03.2005 Gazette 2005/12)**

(54) **VERFAHREN UND KOMMUNIKATIONSANORDNUNG ZUR ÜBERPRÜFUNG VON TEILNEHMERANSCHLUSSLEITUNGEN**

METHOD AND COMMUNICATION ASSEMBLY FOR TESTING SUBSCRIBER LINES

PROCEDE ET DISPOSITIF DE COMMUNICATION DESTINES AU CONTROLE DE LIGNES DE CONNEXION D'ABONNES

(84) Benannte Vertragsstaaten:
**DE ES FR GB IT**

(30) Priorität: **15.09.2003 DE 10342557**

(43) Veröffentlichungstag der Anmeldung:
**07.06.2006 Patentblatt 2006/23**

(73) Patentinhaber: **SIEMENS AKTIENGESELLSCHAFT
80333 München (DE)**

(72) Erfinder:
• **KOZEK, Werner
A-1220 Wien (AT)**
• **SCHÜSZLER, Bert
A-1220 Wien (AT)**

(56) Entgegenhaltungen:
**WO-A-02/13405**  **DE-C- 10 154 937**

## Beschreibung

In aktuellen Kommunikationsnetzen sind die Teilnehmer bzw. den Teilnehmern zugeordnete Kommunikationsendgeräte - wie beispielsweise Netzabschlusseinrichtungen (NT: Network Termination) - über Teilnehmeranschlussleitungen an zentrale Vermittlungseinrichtungen bzw. digitale Multiplexer-Einrichtungen (DSLAM: Digital Subscriber Line Access Multiplexer) angeschlossen. Der Anschluss der teilnehmerseitigen Kommunikationsendgeräte bzw. der Vermittlungseinrichtungen an die jeweilige Teilnehmeranschlussleitung - welche z.B. als Zweidraht-oder Vierdraht-Leitung ausgestaltet sein kann - erfolgt jeweils über eine Teilnehmeranschlusseinheit bzw. über ein in der Teilnehmeranschlusseinheit angeordnetes Modem, wobei mehrere Teilnehmeranschlußleitungen an einer Teilnehmeranschlußeinheit angeschlossen sein können.

Die Datenkommunikation zwischen den Modems über die Teilnehmeranschlußleitung kann beispielsweise mittels eines xDSL-Übertragungsverfahren erfolgen. Bei derartigen Übertragungsverfahren wird vor Beginn der eigentlichen Datenübertragung und vor Anschluss eines teilnehmerseitigen Modems (singleended-Betrieb) durch das vermittlungsstellenseitige Modem ein oder mehrere die jeweilige Teilnehmeranschlussleitung kennzeichnende Parameter (wie beispielsweise Leitungslänge, Abschlussimpedanz, Position von Bridged Taps) im Rahmen eines Präqualifizierungsverfahrens ermittelt. Dadurch können dem anzuschließenden Teilnehmer bzw. zukünftigen Benutzer jeweils vorab Informationen über die maximal erzielbare Datenrate zur Verfügung gestellt werden. Neben dem Präqualifizierungsverfahren sind weitere Verfahren zum einseitigen und zweiseitigen Test von Teilnehmeranschlussleitungen bekannt. So ist in DE 10154937 ein ADSL-Präqualifizierungsverfahren mit Echo-Canceller-Optimierung auf maximale Trennschärfe beschrieben.

Derartige Verfahren eignen sich zwar grundsätzlich auch zur Diagnose von amtseitigen Unterbrechungen, jedoch erfordern diese Verfahren entweder spezifisches, mit wirtschaftlichen Aufwand verbundenes Messequipment oder eine Neuprogrammierung des vermittlungsstellenseitigen Modems.

Das Dokument WO 02/13405 offenbart ein Verfahren gemäß des Oberbegriffs des Anspruchs 1 und eine Kommunikationsanordnung gemäß des Oberbegriffs des Anspruchs 7.

Der Erfindung liegt die Aufgabe zugrunde, ein Verfahren zur Überprüfung von Teilnehmeranschlussleitungen insbesondere zur Diagnose von amtsseitigen Unterbrechungen zu schaffen, bei welchem auf den Einsatz kostenintensiver Messgeräte verzichtet werden kann. Die Aufgabe wird ausgehend von einem Verfahren und einer Kommunikationsanordnung gemäß dem Oberbegriff der Patentansprüche 1 und 7 durch deren kennzeichnende Merkmale gelöst.

Bei dem erfindungsgemäßen Verfahren zur Überprüfung von zumindest einer an einer Teilnehmeranschlusseinheit anschließbaren Teilnehmeranschlussleitung wird zumindest ein Testsignal erzeugt und in Richtung Teilnehmeranschlussleitung ausgesendet. Der wesentliche Aspekt des erfindungsgemäßen Verfahrens besteht darin, dass von der Teilnehmeranschlusseinheit bei nicht wirksam angeschlossener Teilnehmeranschlussleitung das zumindest eine Testsignal in Richtung der zumindest einen Teilnehmeranschlussleitung ausgesendet und zumindest ein daraus resultierendes erstes Echosignal empfangen, erfasst und festgehalten wird. Von der Teilnehmeranschlusseinheit wird bei zumindest einer im kurzgeschlossenen oder offenen Zustand an die Teilnehmeranschlusseinheit angeschlossenen Teilnehmeranschlussleitung das zumindest eine Testsignal über die zumindest eine Teilnehmeranschlussleitung ausgesendet und zumindest ein daraus resultierendes zweites Echosignal empfangen, erfasst und festgehalten. Bei Auftreten einer Fehlfunktion wird von der Teilnehmeranschlusseinheit das zumindest eine Testsignal in Richtung der zumindest einen Teilnehmeranschlussleitung ausgesendet und zumindest ein daraus resultierendes Fehler-Echosignal empfangen und erfasst. Das zumindest eine erfasste Fehler-Echo-Signal wird mit dem zumindest einen ersten und/ oder zweiten festgehaltenen Echosignal verglichen.

Der wesentliche Vorteil des erfindungsgemäßen Verfahrens besteht darin, dass durch den Vergleich des erfassten Fehler-Echosignals mit dem ersten und/ oder zweiten festgehaltenen Echosignal ohne Einsatz von wirtschaftlich aufwendigem Meßequipment zumindest eine amtsseitige bzw. vermittlungsstellenseitige Unterbrechung der Teilnehmeranschlussleitung klar detektiert werden kann. Des Weiteren können mit Hilfe des erfindungsgemäßen Verfahrens auf schnelle und einfache Weise die wichtigsten xDSL-Störfälle erkannt und entsprechende Maßnahmen getroffen werden.

Gemäß einer vorteilhaften Ausgestaltung des erfindungsgemäßen Verfahrens werden die Testsignale im Rahmen einer Trainingsphase ausgesendet - Anspruch 2. Durch diese vorteilhafte Ausgestaltung wird das erfindungsgemäße Verfahren weiter vereinfacht, da bereits vorhandene, bzw. standardisierte Testsignale (welche z.B. in Rahmen des Präqualifizierungsverfahrens ausgesendet werden) eingesetzt werden können. Derartige im Rahmen einer Trainingsphase ausgesendete Testsignale sind beispielsweise in den Druckschriften

ITU-T G.994.1 Handshake procedures for digital subscriber line (DSL) transceivers
ITU-T G.992.3 Asymmetric digital subscriber line (ADSL) transceivers - 2
beschrieben.

Vorteilhaft wird das zumindest eine Testsignal (ts) von einem der jeweiligen Teilnehmeranschlusseinheit zugeordneten Modem erzeugt - Anspruch 4. Bei handelsüblichen Modems kann zur Durchführung des erfindungsgemäßen Verfahrens auf die bereits schaltungstechnisch in Chips implemtierten Trainings- oder Präqualifizierungsverfahren zurückgegriffen werden, wodurch das Verfahren mit geringen technischen und somit geringen wirtschaftlichen Aufwand realisierbar ist.

Weitere vorteilhafte Ausgestaltungen des erfindungsgemäßen Verfahrens sowie eine Kommunikationsanordnung zur Überprüfung von Teilnehmeranschlussleitungen sind den weiteren Ansprüchen zu entnehmen.

Im Folgenden wird das erfindungsgemäße Verfahren anhand eines Blockschaltbildes näher erläutert.

Das Blockschaltbild zeigt eine mehrere Teilnehmeranschlusseinheiten TAE aufweisende, zentrale Vermittlungseinrichtung VE, welche beispielsweise im Teilnehmeranschlussbereich eines Kommunikationsnetzes (auch als Access-Network bezeichnet) angeordnet ist. Die zentrale Vermittlungseinrichtung VE ist beispielsweise für die Vermittlung von breitbandigen Datenströmen - z.B. Video-Datenströme) ausgestaltet. An die Vermittlungseinrichtung VE sind mehrere Teilnehmer - nicht dargestellt - jeweils über eine Netzabschlusseinheit NT (Network Termination) und eine Teilnehmeranschlussleitung TAL an eine Teilnehmeranschlusseinheit TAE angeschlossen. Der Anschluß der Teilnehmeranschlussleitung TAL an die Teilnehmeranschlusseinheit TAE erfolgt über einen Anschlusspunkt AP welcher bei Vermittlungseinrichtungen auch als Main Distribution Frame MDF bezeichnet wird. Der Anschlusspunkt AP ist häufig über eine in der Vermittlungseinrichtung VE angeordnete Verbindungsleitung VL mit der Teilnehmeranschlusseinheit TAE verbunden.

Sowohl in der Teilnehmeranschlusseinheit TAE als auch in der Netzabschlusseinheit NT ist jeweils ein Modem MOD angeordnet, welche in diesem Ausführungsbeispiel gemäß einem xDSL-Übertragungsverfahren wie beispielsweise ADSL ausgestaltet sind.

Während des Betriebs der im Blockschaltbild dargestellten Kommunikationsanordnung tritt hin und wieder der Fall auf, dass die Teilnehmeranschlussleitung TAL amtseitig, d.h. auf Seite der Vermittlungseinrichtung VE oder an einer anderen Stelle der Teilnehmeranschlussleitung TAL in Richtung Teilnehmer unterbrochen ist. Das erfindungsgemäße Verfahren bietet eine Möglichkeit den Ort der Unterbrechung auf der Teilnehmeranschlussleitung genauer zu erfassen.

Zur Realisierung des erfindungsgemäßen Verfahrens weist das in der Vermittlungseinrichtung VE angeordnete Modem MOD Testmittel T zum Erzeugen und Aussenden von Testsignalen sowie Erfassungsmittel EE zum Empfangen und Erfassen von aus den ausgesendeten Testsignal resultierenden d.h. reflektierten Echosignalen sowie Vergleichsmittel KOMP zum Vergleich der erfassten Echosignale auf. Es sei angemerkt, dass das erfindungsgemäße Verfahren auch durch das auf Seiten des Teilnehmers in der Netzabschlusseinrichtung NT angeordnete Modem MOD ausführbar ist.

Im Folgenden wird die Durchführung des erfindungsgemäßen Verfahrens näher erläutert.

Im Rahmen eines Modemselbsttests bei der Erstinstallation der Teilnehmeranschlusseinheit TAE - auch als Line-Card bezeichnet -, also vor Anschaltung eines Teilnehmers bzw. einer Netzabschlusseinrichtung NT oder durch internes Kurzschließen der Analogschnittstelle auf der Teilnehmeranschlusseinheit TAE (entspricht einer nicht wirksam angeschlossenen Teilnehmeranschlussleitung TAL) wird durch die Testmittel T ein erstes Testsignal erzeugt und in Richtung Teilnehmeranschlussleitung TAL, d.h. in Richtung Anschlusspunkt AP bzw. MDF ausgesendet. Durch die Erfassungsmittel EE wird das beispielsweise am MDF reflektierte, erste Echosignal empfangen, erfasst und als Echokennvektor $k_{short}$ der "kurzen" Teilnehmeranschlussleitung festgehalten bzw. gespeichert. Der Echokennvektor k repräsentiert in diesem Fall keine linear transformierte Echoimpulsantwort; vielmehr stellt der Echokennvektor k einen zweidimensionalen Vektor, bestehend aus

-    Gesamtleistung des empfangenen Echosignals, als auch
-    Gruppenlaufzeit des empfangenen Echosignals

dar. Die Erfassungsmittel EE sind derart ausgestaltet, dass die genannten Kenngrößen bzw. Parameter vektorisiert erfasst und zu Vergleichszwecken gespeichert werden.

Nach erfolgter Inbetriebnahme der xDSL-Verbindung über die Teilnehmeranschlussleitung TAL wird nach freiwilliger oder eventuell amtseitig erzwungener Abschaltung des Teilnehmers wiederum durch die Testmittel T ein Testsignal ts erzeugt und über die zumindest eine Teilnehmeranschlussleitung TAL in Richtung Teilnehmer ausgesendet. Das von der Teilnehmeranschlussleitung TAL reflektierte Echosignal wird in beschriebener Art und Weise als Echokennvektor $k_{long}$ der "langen" Teilnehmeranschlussleitung erfasst und festgehalten.

Bei Auftreten eines Fehlers wird wiederum durch die Testmittel T das Testsignal erzeugt und in Richtung Teilnehmeranschlussleitung TAL ausgesendet. Der hierbei durch die Erfassungsmittel EE erfasste und festgehaltene Echokennvektor, in diesem Fall als Fehler-Echokennvektor $k_{error}$ bezeichnet, wird anschließend mit zumindest einen der festgehaltenen Echokennvektoren $k_{short}$, $k_{long}$ der "kurzen" und "langen" Teilnehmerleitung verglichen. Je nach Übereinstimmung des Fehler-Echokennvektors $k_{error}$ mit dem Echokennvektor $k_{long}$ der langen Leitung bzw. $k_{short}$ der kurzen Leitung kann eine Aussage dahingehend gemacht werden, ob die Teilnehmeranschlussleitung TAL auf Seiten der Vermittlungseinrichtung VE bzw. des Amtes - z.B. den der Nähe des MDF - oder eine Unterbrechung anderen Orts wie beispielsweise auf Seiten des Teilnehmers gegeben ist.

Der Vergleich der erfassten bzw. gespeicherten Echokennvektoren $k_{long}$, $k_{error}$, $k_{short}$ kann vorteilhaft nach folgender Vorschrift erfolgen

$$\| k_{long} - k_{error} \| < \| k_{short} - k_{error} \|$$

wobei die Norm des Vektors k gemäß

$$\|k\| = \sqrt{\sum_n |k(n)|^2}$$

definiert ist.

Aus der oben genannten Vergleichsvorschrift ergibt sich eine binäre Information, welche Rückschlüsse über den Ort der Leitungsunterbrechung zulässt.

Wie einleitend erläutert, kann die Teilnehmeranschlussleitung mehrere Adernpaare umfassen. Bei einem HDSL-Übertragungsverfahren werden die Informationen z.B. über eine 2 Adernpaare umfassende Teilnehmeranschlussleitung übermittelt. In diesem Fall wird das erfindungsgemäße Verfahren separat für jedes Adernpaar der Teilnehmeranschlussleitung durchgeführt.

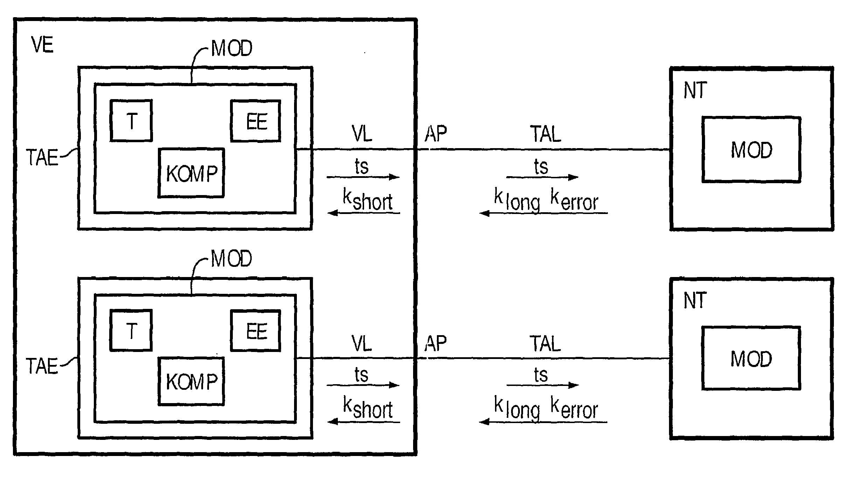

**Patentansprüche**

1. Verfahren zur Überprüfung von zumindest einer an einer Teilnehmeranschlusseinheit (TAE) anschließbaren Teilnehmeranschlussleitung (TAL) wobei zumindest ein Testsignal (ts) erzeugt und in Richtung Teilnehmeranschlussleitung (TAL) ausgesendet wird,
   **dadurch gekennzeichnet,**

   - **dass** von der Teilnehmeranschlusseinheit (TAE) bei nicht wirksam angeschlossener Teilnehmeranschlussleitung (TAL) das zumindest eine Testsignal (ts) in Richtung der zumindest einen Teilnehmeranschlussleitung (TAL) ausgesendet und zumindest ein daraus resultierendes erstes Echosignal ($k_{short}$) empfangen, erfasst und festgehalten wird,
   - **dass** von der Teilnehmeranschlusseinheit (TAE) bei zumindest einer im kurzgeschlossenen oder offenen Zustand an die Teilnehmeranschlusseinheit angeschlossenen Teilnehmeranschlussleitung (TAL) das zumindest eine Testsignal (ts) über die zumindest eine Teilnehmeranschlussleitung (TAL) ausgesendet und zumindest ein daraus resultierendes zweites Echosignal ($k_{long}$) empfangen, erfasst und festgehalten wird,
   - **dass** bei Auftreten einer Fehlfunktion von der Teilnehmeranschlusseinheit (TAE) das zumindest eine Testsignal (ts) in Richtung der zumindest einen Teilnehmeranschlussleitung (TAL) ausgesendet und zumindest ein daraus resultierendes Fehler-Echosingal ($k_{error}$) empfangen und erfasst wird, wobei das zumindest eine erfasste Fehler-Echosignal ($k_{error}$) mit dem zumindest einen ersten und/oder zweiten festgehaltenen Echosignal ($k_{short}$ , $k_{long}$) verglichen wird.

2. Verfahren nach Anspruch 1,
   **dadurch gekennzeichnet,**
   **dass** das zumindest eine Testsignal (ts) im Rahmen einer Trainingsphase ausgesendet werden.

3. Verfahren nach Anspruch 1 oder 2,
   **dadurch gekennzeichnet,**
   **dass** die Echosignale ($k_{short}$, $k_{long}$, $k_{error}$) als zweidimensionale Echovektoren bestehend aus Gesamtleistung des Echos und Gruppenlaufzeit des Echos festgehalten und miteinander verglichen werden.

4. Verfahren nach einem der vorherigen Ansprüche,
   **dadurch gekennzeichnet,**
   **dass** das zumindest eine Testsignal (ts) von einem der jeweiligen Teilnehmeranschlusseinheit (TAE) zugeordneten Modem (MOD) erzeugt werden.

**5.** Verfahren nach Anspruch 4,
**dadurch gekennzeichnet,**
**dass** das Modem (MOD) gemäß einem xDSL-Übertragungsverfahren ausgestaltet ist.

**6.** Verfahren nach einem der vorherigen Ansprüche,
**dadurch gekennzeichnet,**
**dass** es bei einer mehrere Adernpaare umfassenden Teilnehmeranschlussleitung (TAL) pro Adernpaar durchgeführt wird.

**7.** Kommunikationsanordnung zur Überprüfung von zumindest einer an einer Teilnehmeranschlusseinheit (TAE) anschließbaren Teilnehmeranschlussleitung (TAL),
mit der Teilnehmeranschlusseinheit (TAE) zugeordneten Testmitteln (MOD, T) zum Erzeugen und Aussenden von zumindest einem Testsignal (ts) in Richtung der zumindest einen Teilnehmeranschlussleitung (TAL),
**dadurch gekennzeichnet,**
**dass** den Testmitteln (MOD, T) Erfassungsmittel (EE) zugeordnet sind, welche derart ausgestaltet sind,

- **dass** bei zumindest einer nicht wirksam an die Teilnehmeranschlusseinheit (TAE) angeschlossener Teilnehmeranschlussleitung (TAL) das zumindest eine Testsignal (ts) in Richtung der zumindest einen Teilnehmeranschlussleitung (TAL) ausgesendet und zumindest ein daraus resultierendes erstes Echosignal ($k_{short}$) empfangen, erfaßt und festgehalten wird,
- **dass** bei zumindest einer im kurzgeschlossenen oder offenen Zustand an die Teilnehmeranschlusseinheit (TAE) angeschlossenen Teilnehmeranschlussleitung (TAL) das zumindest eine Testsignal (ts) über die zumindest eine Teilnehmeranschlussleitung (TAL) ausgesendet und zumindest ein daraus resultierendes zweites Echosignal ($k_{long}$) empfangen, erfasst und festgehalten wird,
- **dass** bei Auftreten einer Fehlfunktion das zumindest eine Testsignal (ts) in Richtung der zumindest einen Teilnehmeranschlussleitung (TAL) ausgesendet und zumindest ein daraus resultierendes Fehler-Echosingal ($k_{error}$) empfangen und erfasst wird,
- **dass** den Erfassungsmitteln (EE) Vergleichmittel (KOMP) zugeordnet sind durch welche das zumindest eine erfasste Fehler-Echosignal ($k_{error}$) mit dem zumindest einen ersten und/oder zweiten festgehaltenen Echosignal ($k_{short}$ , $k_{long}$) verglichen wird.

**8.** Kommunikationsanordnung nach Anspruch 7,
**dadurch gekennzeichnet,**
**dass** die Erfassungs- und Vergleichsmittel (EE, KOMP) derart ausgestaltet sind, dass die Echosignale ($k_{short}$, $k_{long}$, $k_{error}$) als zweidimensionale Echovektoren bestehend aus Gesamtleistung des Echos und Gruppenlaufzeit des Echos festgehalten, erfasst und miteinander verglichen werden.

**9.** Kommunikationsanordnung nach Anspruch 7 oder 8,
**dadurch gekennzeichnet,**
**dass** die Test- und Erfassungsmittel (T, EE) in einem der Teilnehmeranschlusseinheit (TAE) zugeordneten Modem (MOD) angeordnet sind.

**10.** Kommunikationsanordnung nach Anspruch 9,
**dadurch gekennzeichnet,**
**dass** das Modem (MOD) gemäß einem xDSL-Übertragungsverfahren ausgestaltet ist.

**11.** Kommunikationsanordnung nach einem der Ansprüche 7 bis 10,
**dadurch gekennzeichnet,**
**dass** die Testmittel (T) derart ausgestaltet sind, dass das zumindest eine Testsignal (ts) im Rahmen einer Trainingsphase ausgesendet werden.

**12.** Kommunikationsanordnung nach einem der Ansprüche 7 bis 11,
**dadurch gekennzeichnet,**
**dass** die Teilnehmeranschlusseinheit in einer Vermittlungseinrichtung (VE) oder einer digitalen Multiplexereinrichtung angeordnet ist.

**13.** Kommunikationsanordnung nach einem der Ansprüche 7 bis 12,
**dadurch gekennzeichnet,**

**dass** die Teilnehmeranschlussleitung (TAL) über einen der Vermittlungseinrichtung (VE) zugeordneten Anschlusspunkt (AP) an die Teilnehmeranschlusseinheit (TAE) angeschlossen ist, wobei der Anschlusspunkt (AP) über zumindest eine Verbindungsleitung (VL) mit der Teilnehmeranschlusseinheit (TAE) verbunden ist.

14. Kommunikationsanordnung nach einem der Ansprüche 7 bis 13,
**dadurch gekennzeichnet,**

- **dass** die Teilnehmeranschlussleitung (TAL) n Adernpaare umfasst,
- **dass** die Test-, Erfassungs- und Vergleichsmittel (T, EE, KOMP) derart ausgestaltet sind, dass das zumindest eine Testsignal (ts) in Richtung jedes Adernpaares der Teilnehmeranschlussleitung (TAL) übermittelt wird und pro Adernpaar das zumindest eine erfasste Fehler-Echosignal ($k_{error}$) mit dem zumindest einen ersten und/oder zweiten festgehaltenen Echosignal ($k_{short}$, $k_{long}$) verglichen wird.

## Claims

1. Method for testing at least one subscriber line (TAL) which can be connected to a subscriber line unit (TAE), wherein at least one test signal (ts) is generated and transmitted in the direction of the subscriber line (TAL),
**characterised in that**

- if a subscriber line (TAL) is not actively connected the at least one test signal (ts) is transmitted by the subscriber line unit (TAE) in the direction of the at least one subscriber line (TAL) and at least one first echo signal ($k_{short}$) resulting therefrom is received, recorded and stored,
- given at least one subscriber line (TAL) connected to the subscriber line unit (TAE) in the short-circuited or open condition, the at least one test signal (ts) is transmitted by the subscriber line unit (TAE) via the at least one subscriber line (TAL) and at least one second echo signal ($k_{long}$) resulting therefrom is received, recorded and stored,
- if a malfunction occurs, the at least one test signal (ts) is transmitted by the subscriber line unit (TAE) in the direction of the at least one subscriber line (TAL) and at least one error echo signal ($k_{error}$) resulting therefrom is received and recorded, the at least one recorded error echo signal ($k_{error}$) being compared with the at least one first and/or second stored echo signal ($k_{short}$, $k_{long}$).

2. Method according to claim 1,
**characterised in that**
the at least one test signal (ts) is transmitted as part of a training phase.

3. Method according to claim 1 or 2,
**characterised in that**
the echo signals ($k_{short}$, $k_{long}$, $k_{error}$) are stored as two-dimensional echo vectors consisting of total power of the echo and group delay of the echo and compared with one another.

4. Method according to one of the preceding claims,
**characterised in that**
the at least one test signal (ts) is generated by a modem (MOD) assigned to the respective subscriber line unit (TAE).

5. Method according to claim 4,
**characterised in that**
the modem (MOD) is embodied in accordance with an xDSL transmission method.

6. Method according to one of the preceding claims,
**characterised in that**
in the case of a subscriber line (TAL) comprising several wire pairs it is performed for each wire pair.

7. Communication arrangement for testing at least one subscriber line (TAL) which can be connected to a subscriber line unit (TAE),
comprising test means (MOD, T) assigned to the subscriber line unit (TAE) for the purpose of generating and transmitting at least one test signal (ts) in the direction of the at least one subscriber line (TAL),
**characterised in that**

the test means (MOD, T) are assigned recording means (EE) which are embodied in such a way that

- if at least one subscriber line (TAL) is not actively connected to the subscriber line unit (TAE), the at least one test signal (ts) is transmitted in the direction of the at least one subscriber line (TAL) and at least one first echo signal ($k_{short}$) resulting therefrom is received, recorded and stored,
- given at least one subscriber line (TAL) connected to the subscriber line unit (TAE) in the short-circuited or open condition, the at least one test signal (ts) is transmitted via the at least one subscriber line (TAL) and at least one second echo signal ($k_{long}$) resulting therefrom is received, recorded and stored,
- if a malfunction occurs, the at least one test signal (ts) is transmitted in the direction of the at least one subscriber line (TAL) and at least one error echo signal ($k_{error}$) resulting therefrom is received and recorded,
- the recording means (EE) are assigned comparison means (KOMP) by means of which the at least one recorded error echo signal ($k_{error}$) is compared with the at least one first and/or second stored echo signal ($k_{short}$ , $k_{long}$).

8. Communication arrangement according to claim 7,
**characterised in that**
the recording and comparison means (EE, KOMP) are embodied in such a way that the echo signals ($k_{short}$ , $k_{long}$ , $k_{error}$) are recorded as two-dimensional echo vectors consisting of total power of the echo and group delay of the echo, stored and compared with one another.

9. Communication arrangement according to claim 7 or 8,
**characterised in that**
the test and recording means (T, EE) are disposed in a modem (MOD) assigned to the subscriber line unit (TAE).

10. Communication arrangement according to claim 9,
**characterised in that**
the modem (MOD) is embodied in accordance with an xDSL transmission method.

11. Communication arrangement according to one of claims 7 to 10,
**characterised in that**
the test means (T) are embodied in such a way that at least one test signal (ts) is transmitted in the course of a training phase.

12. Communication arrangement according to one of claims 7 to 11,
**characterised in that**
the subscriber line unit is disposed in a switching equipment (VE) or a digital multiplexer device.

13. Communication arrangement according to one of claims 7 to 12,
**characterised in that**
the subscriber line (TAL) is connected to the subscriber line unit (TAE) via an access point (AP) assigned to the switching equipment (VE), the access point (AP) being connected to the subscriber line unit (TAE) via at least one trunk line (VL).

14. Communication arrangement according to one of claims 7 to 13,
**characterised in that**

- the subscriber line (TAL) comprises n wire pairs,
- the test, recording and comparison means (T, EE, KOMP) are embodied in such a way that the at least one test signal (ts) is transmitted in the direction of each wire pair of the subscriber line (TAL) and for each wire pair the at least one recorded error echo signal ($k_{error}$) is compared with the at least one first and/or second stored echo signal ($k_{short}$, $k_{long}$).

**Revendications**

1. Procédé pour contrôler au moins une ligne de raccordement d'abonné (TAL) pouvant être raccordée à une unité de raccordement d'abonné (TAE), au moins un signal test (ts) étant généré et envoyé en direction de la ligne de raccordement d'abonné (TAL),

**caractérisé en ce que**

- l'unité de raccordement d'abonné (TAE) envoie l'au moins un signal test (ts) en direction de l'au moins une ligne de raccordement d'abonné (TAL) lorsque la ligne de raccordement d'abonné (TAL) n'est pas raccordée de façon efficace et au moins un premier signal d'écho ($k_{short}$) en résultant est reçu, enregistré et conservé,
- **en ce que** l'unité de raccordement d'abonné (TAE) envoie l'au moins un signal test (ts) par l'au moins une ligne de raccordement d'abonné (TAL) lorsque au moins une ligne de raccordement d'abonné (TAL) est raccordée à l'unité de raccordement d'abonné dans l'état consécutif ou ouvert et au moins un second signal d'écho ($k_{long}$) en résultant est reçu, enregistré et conservé,
- **en ce que**, en cas d'apparition d'un dysfonctionnement, l'unité de raccordement d'abonné (TAE) envoie l'au moins un signal test (ts) en direction de l'au moins une ligne de raccordement d'abonné (TAL) et au moins un signal d'écho d'erreur ($k_{error}$) en résultant est reçu et enregistré, l'au moins un signal d'écho d'erreur ($k_{error}$) enregistré étant comparé avec l'au moins un premier et/ou un second signal d'écho ($k_{short}$, $k_{long}$) conservé.

2. Procédé selon la revendication 1,
   **caractérisé en ce que**
   l'au moins un signal test (ts) est envoyé dans le cadre d'une phase d'entraînement.

3. Procédé selon la revendication 1 ou 2,
   **caractérisé en ce que**
   les signaux d'écho ($k_{short}$, $k_{long}$, $k_{error}$) sont conservés sous la forme de vecteurs d'écho bidimensionnels constitués de la puissance globale de l'écho et du temps de propagation de groupe de l'écho et sont comparés entre eux.

4. Procédé selon l'une quelconque des revendications précédentes,
   **caractérisé en ce que**
   l'au moins un signal test (ts) est généré par un modem (MOD) attribué à l'unité de raccordement d'abonné (TAE) respective.

5. Procédé selon la revendication 4,
   **caractérisé en ce que**
   le modem (MOD) est conçu selon un procédé de transmission xDSL.

6. Procédé selon l'une quelconque des revendications précédentes,
   **caractérisé en ce que**
   il est mis en oeuvre sur une ligne de raccordement d'abonné (TAL) comprenant plusieurs paires de fils par paire de fils.

7. Dispositif de communication pour contrôler au moins une ligne de raccordement d'abonné (TAL) pouvant être raccordée à une unité de raccordement d'abonné (TAE),
   avec des moyens de test (MOD, T) attribués à l'unité de raccordement d'abonné (TAE) pour générer et envoyer au moins un signal test (ts) en direction de l'au moins une ligne de raccordement d'abonné (TAL),
   **caractérisé en ce que**
   des moyens d'enregistrement (EE) sont attribués aux moyens de test (MOD, T) et sont conçus de telle sorte que

- lorsque, dans au moins une ligne de raccordement d'abonné (TAL) raccordée de façon non efficace à l'unité de raccordement d'abonné (TAE), l'au moins un signal (ts) est envoyé en direction de l'au moins une ligne de raccordement d'abonné (TAL) et au moins un premier signal d'écho ($k_{short}$) en résultant est reçu, enregistré et conservé,
- **en ce que**, lorsque au moins une ligne de raccordement d'abonné (TAL) est raccordée à l'unité de raccordement d'abonné (TAE) dans l'état court-circuité ou ouvert, l'au moins un signal test (ts) est envoyé par l'au moins une ligne de raccordement d'abonné (TAL) et au moins un second signal d'écho ($k_{long}$) en résultant est reçu, enregistré et conservé,
- **en ce que**, en cas d'apparition d'un dysfonctionnement, l'au moins un signal test (ts) est envoyé en direction de l'au moins une ligne de raccordement d'abonné (TAL) et au moins un signal d'écho d'erreur ($k_{error}$) en résultant est reçu et enregistré,
- **en ce qu'**aux moyens d'enregistrement (EE) sont attribués des moyens de comparaison (KOMP) par lesquels l'au moins un signal d'écho d'erreur ($k_{error}$) enregistré est comparé avec l'au moins un premier et/ou un second signal d'écho ($k_{short}$, $k_{long}$) conservé.

**8.** Dispositif de communication selon la revendication 7,
**caractérisé en ce que**
les moyens d'enregistrement et de comparaison (EE, KOMP) sont conçus de telle sorte que les signaux d'écho ($k_{short}$, $k_{long}$, $k_{error}$) sont conservés sous la forme de vecteurs d'écho bidimensionnels constitués de la puissance globale de l'écho et du temps de propagation de groupe de l'écho et sont comparés entre eux.

**9.** Dispositif de communication selon la revendication 7 ou 8,
**caractérisé en ce que**
les moyens de test et d'enregistrement (T, EE) sont disposés dans un modem (MOD) attribué à l'unité de raccordement d'abonné (TAE).

**10.** Dispositif de communication selon la revendication 9,
**caractérisé en ce que**
le modem (MOD) est conçu selon un procédé de transmission xDSL.

**11.** Dispositif de communication selon l'une quelconque des revendications 7 à 10,
**caractérisé en ce que**
les moyens de test (T) sont conçus de telle sorte que l'au moins un signal de test (ts) est envoyé dans le cadre d'une phase d'entraînement.

**12.** Dispositif de communication selon l'une quelconque des revendications 7 à 11,
**caractérisé en ce que**
l'unité de raccordement d'abonné est disposée dans un dispositif de transmission (VE) ou dans un dispositif multiplexeur numérique.

**13.** Dispositif de communication selon l'une quelconque des revendications 7 à 12,
**caractérisé en ce que**
la ligne de raccordement d'abonné (TAL) est raccordée par un point de raccordement (AP), attribué au dispositif de transmission (VE), à l'unité de raccordement d'abonné (TAE), le point de raccordement (AP) étant relié par au moins une ligne de liaison (VL) à l'unité de raccordement d'abonné (TAE).

**14.** Dispositif de communication selon l'une quelconque des revendications 7 à 13,
**caractérisé en ce que**

- la ligne de raccordement d'abonné (TAL) comprend n paires de fils
- **en ce que** les moyens de test, d'enregistrement et de comparaison (T, EE, KOMP) sont conçus de telle sorte que l'au moins un signal test (ts) est transmis en direction de chaque paire de fils de la ligne de raccordement d'abonné (TAL) et, pour chaque paire de fils, l'au moins un signal d'écho d'erreur ($k_{error}$) enregistré est comparé avec l'au moins un premier et/ou un second signal d'écho ($k_{short}$, $k_{long}$) conservé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10154937

- WO 0213405 A